# EUROPEAN PATENT APPLICATION

(11) **EP 2 650 724 A1**
(43) Date of publication of application: **16.10.2013**
(21) Application number: 11846606.9
(22) Date of filing: 05.12.2011
(51) Int. Cl.: G03B 9/02

(54) **LIGHT ADJUSTING DEVICE**

(30) Priority: 06.12.2010 JP 2010271322
(71) Applicant: Olympus Corporation, Shibuya-ku Tokyo 151-0072 (JP)
(72) Inventor: OKITA Tatsuhiko, Tokyo 151-0072 (JP)
(74) Representative: Winter, Brandl, Fürniss, Hübner, Röss, Kaiser, Polte - Partnerschaft
(86) International application number: PCT/JP2011/078090
(87) International publication number: WO 2012/077642

(57) **Abstract**

A light adjusting apparatus includes a first substrate in which, an optical aperture is formed, and a second substrate in which, an optical aperture is formed, at least one rotating-shaft member which is rotatably installed on the first substrate and the second substrate, at least one light adjusting unit which is joined to the rotating-shaft member, and a drive unit which moves the light adjusting unit. By moving the light adjusting unit by rotating the rotating-shaft member by the drive unit, the light adjusting unit is pivoted alternately to an opened position at which, the light adjusting unit is facing the optical aperture, and a retracted position at which, the light adjusting unit is retracted from the optical aperture, and incident light which passes through the optical aperture is adjusted in the light adjusting apparatus. The light adjusting unit includes an optical element, and has an isolating unit which isolates a surface facing the first substrate and the second substrate of the optical element, and the first substrate and the second substrate.

## Description

### TECHNICAL FIELD

The present invention relates to a light adjusting apparatus.

### BACKGROUND ART

In recent years, with improved high-quality performance of a portable equipment having an image pickup function and a small-size optical apparatus such as a micro video scope, with regard to optical elements such as a lens and an aperture, there has been increasing demand for an application of a focusing lens, a variable aperture, and an optical filter instead of a conventional fixed focusing lens and a fixed aperture stop, and further small-sizing (slimming) of such optical elements has been sought.

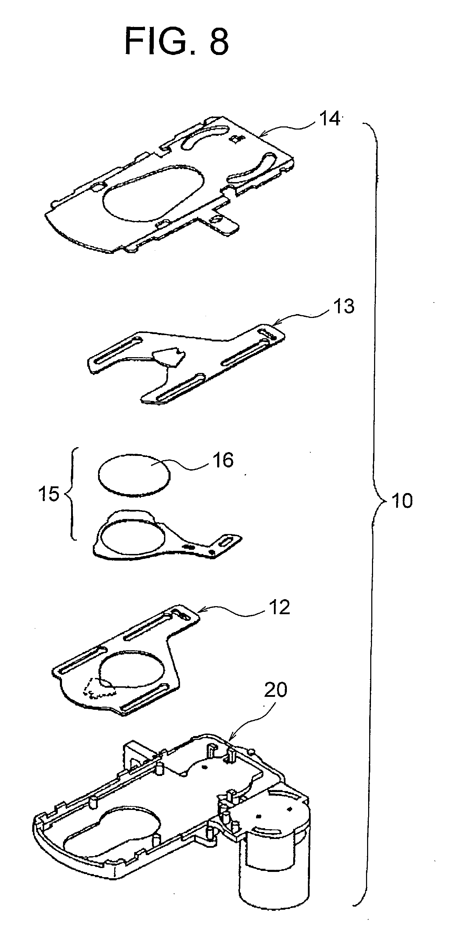

Fig. 8 is an exploded perspective view showing an overall structure of a conventional diaphragm apparatus. In the diaphragm apparatus described in Patent Document 1, as shown in Fig. 8, a structure in which, an optical filter unit 15 and an equipment 20 thereof are installed integrally as an diaphragm apparatus 10, has been proposed, and an adjustment of an amount of light is made possible by switching of an optical filter 16 by driving diaphragm blades 12 and 13 which are covered by a blade cover 14.

### PRIOR ART DOCUMENT

### PATENT DOCUMENTS

Patent Document 1: Japanese Patent Application Laid-open Publication No. 2007-017594

### SUMMARY OF THE INVENTION

### TECHNICAL PROBLEM

However, in the diaphragm apparatus described in Patent Document 1, the optical filter 16 is moved between the two diaphragm blades 12 and 13. Therefore, at the time of driving the optical filter 16, the optical filter 16 makes a contact with the upper and the lower diaphragm blades 12 and 13. Accordingly, an optical thin film formed on the optical filter 16 comes off, and when the optical filter 16 is driven continuously, there is a possibility that an optical performance is degraded with the continuous driving.

The present invention has been made in view of the abovementioned circumstances, and an object of the present invention is to provide a light adjusting apparatus in which, it is possible prevent damage to an optical thin film which has been formed on components such as an optical filter and a lens.

### SOLUTION TO PROBLEM

To solve the abovementioned issues and to achieve the object, a light adjusting apparatus according to the present invention includes a first substrate in which, an optical aperture is formed, and a second substrate in which, an optical aperture is formed, at least one rotating-shaft member which is rotatably installed on the first substrate and the second substrate, at least one light adjusting unit which is joined to the rotating shaft member, and a drive unit which moves the light adjusting unit, and by moving the light adjusting unit by rotating the rotating-shaft member by the drive unit, the light adjusting unit is pivoted alternately to an opened position at which, the light adjusting unit is corresponding to the optical aperture, and a retracted position at which, the light adjusting unit is retracted from the optical aperture, and incident light which passes through the optical aperture is adjusted in the light adjusting apparatus, and the light adjusting unit includes an optical element, and has an isolating unit which isolates a surface opposite each other the first substrate and the second substrate of the optical element, and the first substrate and the second substrate.

In the light adjusting apparatus according to the present invention, it is preferable that the isolating unit is a frame member which holds the optical element from around, and has a protruding portion which protrudes in an optical axial direction.

In the light adjusting apparatus according to the present invention, it is preferable that the frame member has a notch portion, and the optical element is joined to the frame member at the notch portion.

In the light adjusting apparatus according to the present invention, it is preferable that a width of the notch portion is smaller than a diameter of the optical element, and the optical element is joined by an elastic force of the frame member.

In the light adjusting apparatus according to the present invention, it is preferable that the isolating unit includes at least two protruding portions which hold locally, and the optical element is held by the protruding portion.

In the light adjusting apparatus according to the present invention, it is preferable that the rotating-shaft member is formed by a circular cylindrical shaped magnet, and a drive source of the rotating-shaft member is an electromagnetic drive source which includes a yoke and a winding coil, and the circular cylindrical shaped magnet is rotated by the electromagnetic drive source.

### ADVANTAGEOUS EFFECTS OF INVENTION

A light adjusting apparatus according to the present invention shows an effect that it is possible to prevent damage to an optical thin film which has been formed on components such as an optical filter and a lens.

### BRIEF DESCRIPTION OF THE DRAWINGS

Fig. 1 is an exploded perspective view of a light adjusting apparatus according a first embodiment of the present invention;
Fig. 2 is a perspective view showing the light adjusting apparatus according to the first embodiment, in an assembled state;
Fig. 3 is a plan view describing a movement of the light adjusting apparatus according to the first embodiment;
Fig. 4 is a plan view describing the movement of the light adjusting apparatus according to the first embodiment;
Fig. 5A and Fig. 5B are diagrams showing a structure of a light adjusting unit in the first embodiment, where, Fig. 5A is an exploded perspective view and Fig. 5B is a perspective view showing an assembled state;
Fig. 6A and Fig. 6B are diagrams showing a structure of a light adjusting unit in a second embodiment of the present invention, where, Fig. 6A is an exploded perspective view and Fig. 6B is a perspective view showing an assembled state;
Fig. 7A and Fig. 7B are diagrams showing a structure of a light adjusting unit in a third embodiment of the present invention, where, Fig. 7A is an exploded perspective view and Fig. 7B is a perspective view showing an assembled state; and
Fig. 8 is an exploded perspective view showing an overall structure of a conventional diaphragm apparatus.

### DESCRIPTION OF EMBODIMENTS

Exemplary embodiments of a light adjusting apparatus according to the present invention will be described below in detail by referring to the accompanying diagrams. However, the present invention is not restricted to the embodiments described below.

### (First embodiment)

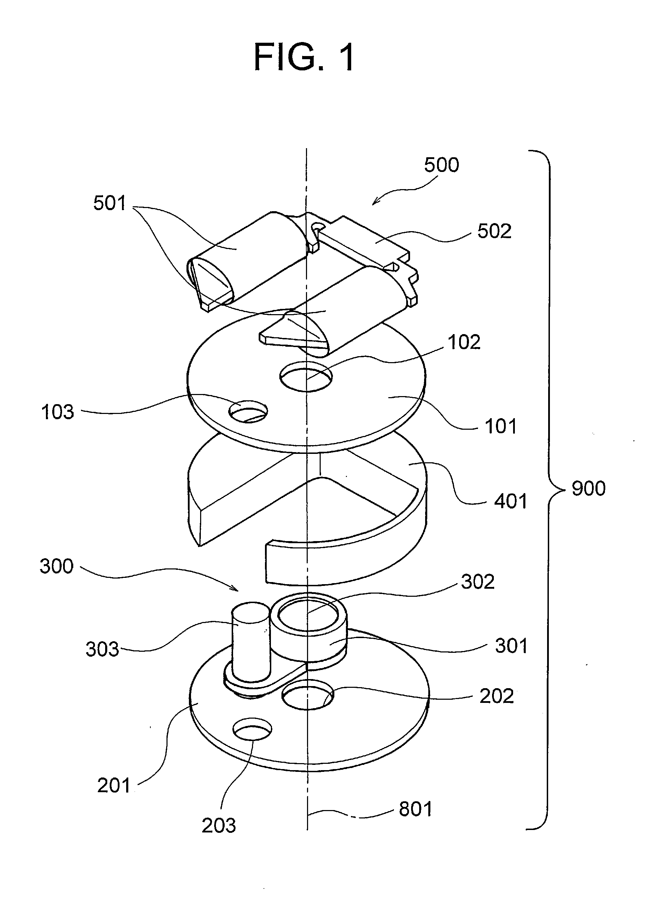

A light adjusting apparatus 900 according to a first embodiment of the present invention will be described below by referring to diagrams from Fig. 1 to Fig. 5. Fig. 1 is an exploded perspective view of the light adjusting apparatus 900. In Fig. 1, an optical axial direction 801 of the light adjusting apparatus 900 is shown by an alternate long and short dashed line. The light adjusting apparatus 900 includes a substrate 101, a substrate 201, a light adjusting unit 300, a spacer 401, and an electromagnetic drive source 500 as a drive unit. An optical aperture 102 and a rotating-shaft hole 103 are formed in the substrate 101, and an optical aperture 202 and a rotating-shaft hole 203 are formed in the substrate 201. The light adjusting unit 300 includes a filter frame member 301 and an optical filter 302, and a rotating-shaft member 303 which has a magnetic property. The spacer 401 is disposed between the substrate 101 and the substrate 201, and creates a space for the light adjusting unit 300 to move. Moreover, the electromagnetic drive source 500 is a drive source which makes the light adjusting unit 300 turn, and has a winding coil portion 501 provided on a yoke member 502.

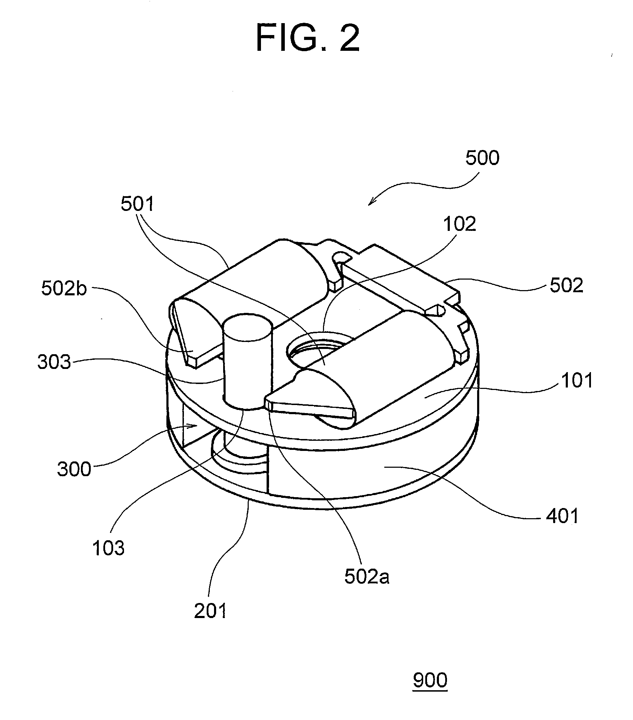

Fig. 2 is a perspective view showing the light adjusting apparatus 900 according to the first embodiment, in an assembled state. The rotating-shaft member 303 of the light adjusting unit 300 is supported by the rotating-shaft holes 103 and 203. The light adjusting unit 300 is disposed between the substrate 101 and the substrate 201. The electromagnetic drive source 500 is disposed on the substrate 101. Front-end portions 502a and 502b of the yoke member 502 are disposed at positions opposite each other the rotating-shaft member 303 which has the magnetic property. Moreover, the light adjusting unit 300 moves by the rotating-shaft member 303 being rotated by the electromagnetic drive source 500.

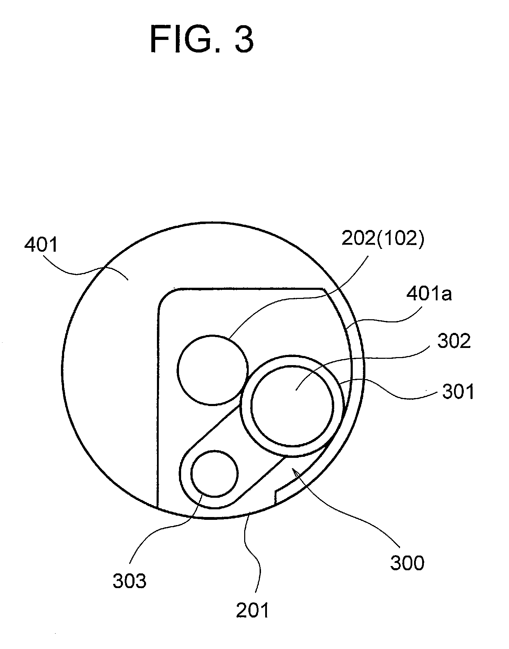

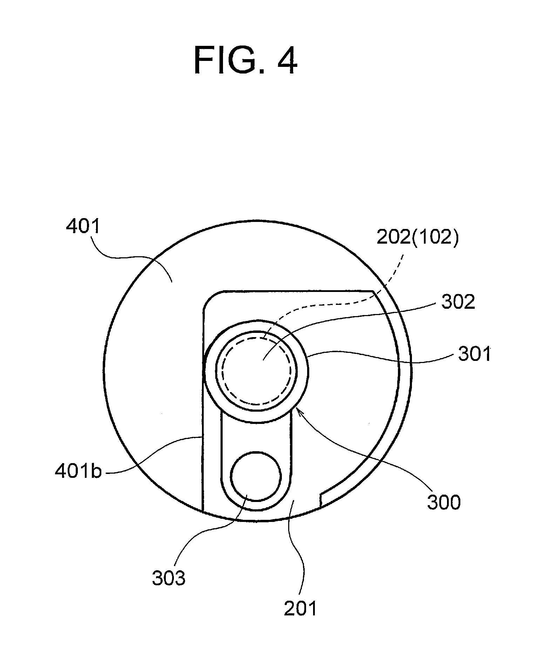

An operation of the light adjusting apparatus 900 according to the first embodiment will be described below by using Fig. 3 and Fig. 4. Here, the substrate 101 and the electromagnetic drive source 500 are omitted. Fig. 3 and Fig. 4 are plan views describing the operation of the light adjusting apparatus 900.

Fig. 3 shows a state in which, the light adjusting unit 300 is at a first stationary position (retracted position) of being retracted from the optical aperture 102. At this time, the light adjusting unit 300 abuts with a curved surface portion 401a of the spacer 401, and comes to rest at that position.
Fig. 4 shows a state in which, the light adjusting unit 300 is at a second stationary position (opened position) overlapping with the optical aperture 102. At this time, the light adjusting unit 300 abuts with a flat surface portion 401b of the spacer 401, and comes to rest. At the second stationary position, light which is incident on the light adjusting apparatus 900 is adjusted by the optical filter 302. In the light adjusting apparatus 900 according to the first embodiment, the rotating-shaft member 303 having a magnetic property is rotated by a magnetic force generated from the front-end portions 502a and 502b, by applying an electric current to the winding coil portion 501. Accordingly, the light adjusting unit 300 is moved to the first stationary position and the second stationary position alternately. Moreover, in the first embodiment, although the spacer 401 is made to function as a stopper for stationary positions of the light adjusting unit 300, a separate stopper member may be used.

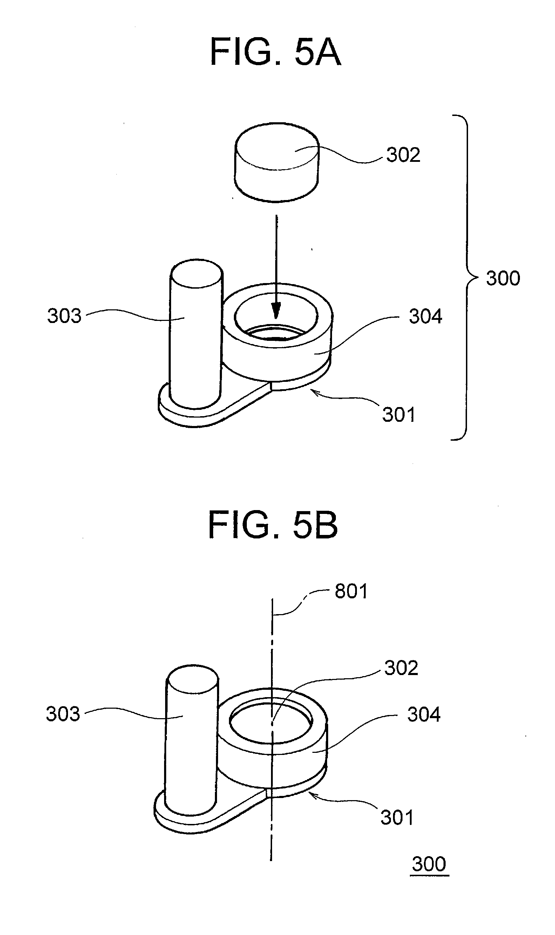

The light adjusting unit 300 in the first embodiment will be described below by using Fig. 5A and Fig. 5B. Fig. 5A and Fig. 5B are diagrams showing a structure of the light adjusting unit 300, where, Fig. 5A is an exploded perspective view of the light adjusting unit 300, and Fig. 5B is a perspective view showing an assembled state of the light adjusting unit 300. Fig. 5B shows a state in which, the optical filter 302 is fitted into a protective portion 304 of the filter frame member 301. In Fig. 5B, the optical axial direction 801, when the optical filter 302 is disposed on the optical aperture 202, is shown by an alternate long and short dashed line. The light adjusting unit 300 includes the filter frame member 301 joined to the rotating-shaft member 303 and the optical filter 302. The protective portion 304 is formed integrally with the filter frame member 301. The optical filter 302 is fitted into the protective member 304 of the filter frame member 301, and the optical filter 302 is held by the protective portion 304. As shown in Fig. 5B, a height in the optical axial direction of the protective member 304 being more than a height of the optical filter 302, a surface opposite each other the substrate 101 and the substrate 201 in the optical filter 302 is isolated from the substrate 101 and the substrate 201. In the first embodiment, a method of joining the optical filter 302 and the filter frame member 301 is not specified in particular, and the optical filter 302 and the filter frame member 301 may be joined by using an adhesive etc.

As shown in Fig. 5B, in the first embodiment, the protective portion 304 holds around the optical filter 302, and also the protective portion 304 is protruded in the optical axial direction more than the optical filter 302. Accordingly, at the time of rotational movement of the light adjusting unit 300, since the protective portion 304 abuts with the spacer 401, the optical filter 302 does not abut with the spacer 401 directly. Moreover, when the light adjusting unit 300 undergoes rotational motion between the substrate 101 and the substrate 201, since the protective portion 304 makes a contact with the substrates 101 and 201, the optical filter 302 does not make a contact with the substrates 101 and 201. Therefore, there is no breaking or chipping of the optical filter 302 due to an impact at the time of abutting. Furthermore, there is no degradation of an optical thin film which is formed on the optical filter 302.

### (Second embodiment)

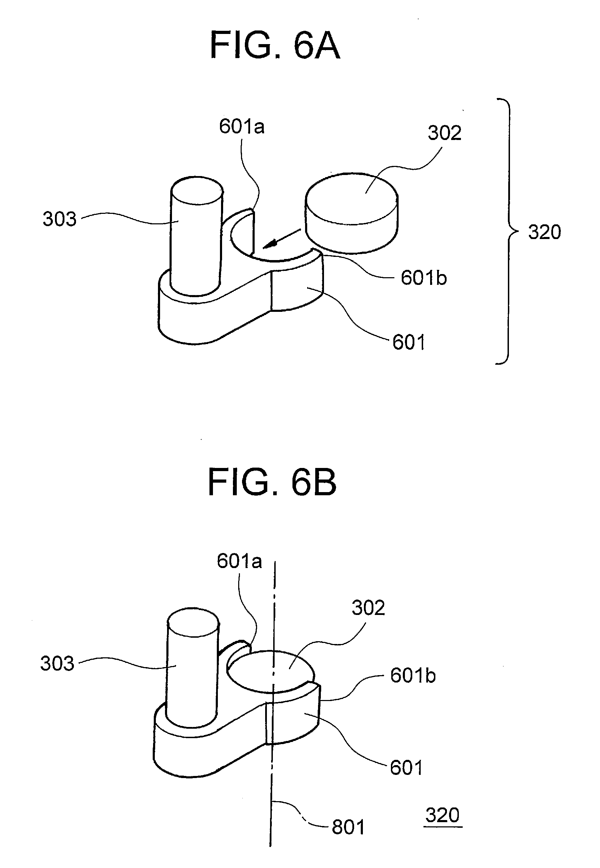

A light adjusting apparatus according to a second embodiment of the present invention will be described below by using Fig. 6A and Fig. 6B. The light adjusting apparatus according to the second embodiment differs from the light adjusting apparatus 900 according to the first embodiment at a point that a filter frame member 601 which replaces the filter frame member 301 in the first embodiment, is used in a light adjusting unit 320, and the rest of the structure and a method of driving being similar as in the first embodiment, a description in detail thereof is omitted. Fig. 6A and Fig. 6B are diagrams showing a structure of the light adjusting unit 320, where, Fig. 6A is an exploded perspective view and Fig. 6B is a perspective view showing an assembled state. Fig. 6B shows a state in which, the optical filter 302 is joined to the filter frame member 601. In Fig. 6B, the optical axial direction 801, when the optical filter 302 is disposed on the optical aperture 202, is shown by an alternate long and short dashed line.

The light adjusting unit 320 includes the rotating-shaft member 303, the optical filter 302, and the filter frame member 601. A height in an optical direction of the filter frame member 601 becomes more than the height of the optical filter 302, and accordingly, the surface opposite each other the substrate 101 and the substrate 201 in the optical filter 302 is isolated from the substrate 101 and the substrate 201. Moreover, notch portions 601a and 601b are formed in a front end of the filter frame member 601. As shown in Fig. 6B, the optical filter 302 is joined to the filter frame member 601 by being engaged with the notch portions 601a and 601b, and held. The optical filter 302 is fixed by an elastic force of the filter frame member 601 by forming a diameter of each of the notch portions 601a and 601b to be smaller than a diameter of the optical filter 302. At this time, it is desirable that a material of the filter frame member 601 is a metal having a superior elasticity. Moreover, in the second embodiment, although the optical filter 302 and the filter frame member 601 are joined by the elastic force of the filter frame member 601, a method such as using an adhesive may be used as another method of joining.

In the second embodiment, the filter frame member 601 holds a part of a circumference of the optical filter 302, and also, the filter frame member 601 is protruded along the optical axial direction 801 more than the optical filter 302.
Accordingly, at the time of rotating the light adjusting unit 320 to move, since the filter frame member 601 abuts with the spacer 401, the optical filter 302 does not abut with the spacer 401 directly. Moreover, when the light adjusting unit 320 undergoes rotational motion between the substrate 101 and the substrate 201, since the filter frame member 601 makes a contact with the substrates 101 and 201, the optical filter 302 does not make a contact with the substrates 101 and 201. Accordingly, there is no breaking or chipping of the optical filter 302 due to an impact at the time of abutting. Furthermore, there is no degradation of the optical thin film which is formed on the optical filter 302. In the second embodiment, mainly the elastic force of the filter frame member 601 is used as a method of joining the optical filter 302 and the filter frame member 601. Therefore, as joining is possible only engagement of the optical filter 302 with the notch portions of the filter frame member 601, it is not necessary to use an adhesive etc., and assembling becomes easier.

### (Third embodiment)

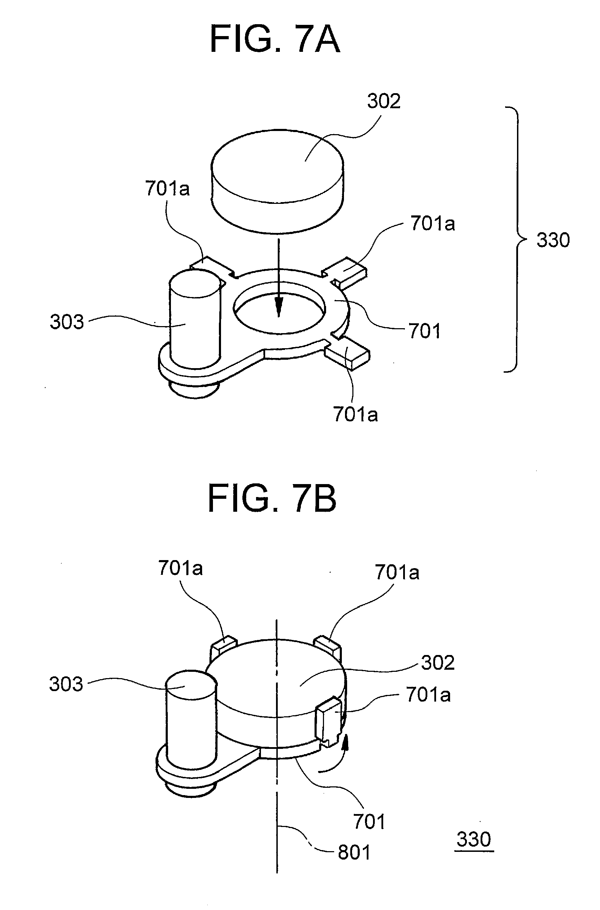

A light adjusting apparatus according to a third embodiment of the present invention will be described below by using Fig. 7A and Fig. 7B. The light adjusting apparatus according to the third embodiment differs from the light adjusting apparatus 900 according to the first embodiment at a point that a filter frame member 701 which replaces the filter frame member 301 in the first embodiment, is used in a light adjusting unit 330, and the rest of the structure and a method of driving being similar as in the first embodiment, a description in detail thereof is omitted. Fig. 7A and Fig. 7B are diagrams showing a structure of the light adjusting unit 330, where, Fig. 7A is an exploded perspective view and Fig. 7B is a perspective view showing an assembled state. Fig. 7B shows a state in which, the optical filter 302 is joined to the filter frame member 701. In Fig. 7B, the optical axial direction 801, when the optical filter 302 is disposed on the optical aperture 202, is shown by an alternate long and short dashed line.

In the third embodiment, the light adjusting unit 330 includes the rotating-shaft member 303, the optical filter 302, and the filter frame member 701. Three protruding portions 701a are formed at an equiangular distance on the filter frame member 701. The protruding portions 701a hold the optical filter 302 by holding locally the circumferential edge of the optical filter 302. Moreover, a height in an optical axial direction of the protruding portion 701a becomes more than the height of the optical filter 302, and accordingly, the surface opposite each other the substrate 101 and the substrate 201 in the optical filter 302 is isolated from the substrate 101 and the substrate 201. In the third embodiment, a method of joining the optical filter 302 and the filter frame member 701 is bending the three protruding portions 701a in the optical axial direction after disposing the optical filter 302 on the filter frame member 701. Thereafter, the optical filter 302 is held by the protruding portions 701a. Although three protruding portions are provided in the light adjusting unit 330 of the third embodiment, the number of protruding portions may be two or not less than four, provided that the optical filter 302 can be held. Moreover, in the third embodiment, although the optical filter 302 is fixed by being held by the protruding portions 701a, an adhesive may be used as another method of fixing.

In the third embodiment, the protruding portions 701a hold the circumferential locations of the optical filter 302, and also are protruded in an optical axial direction more than the optical filter 302. Accordingly, at the time of rotating the light adjusting unit 330 to move, since the protruding portions 701a abut with the spacer 401, the optical filter 302 does not abut with the spacer 401 directly. Moreover, when the light adjusting unit 330 undergoes rotational motion between the substrates 101 and the substrate 201, since the protruding portions 701a make contact with the substrates 101 and 201, the optical filter 302 does not make a contact with the substrates 101 and 201. Accordingly, there is no breaking or chipping of the optical filter 302 due to an impact at the time of striking. Furthermore, there is no degradation of the optical thin film which is formed on the optical filter 302. In the third embodiment, as a method of joining the optical filter 302 and the filter frame member 701, the optical filter 302 is fixed by holding by the protruding portions 701a. Therefore, it is not necessary to use an adhesive etc., and assembling becomes easier.

### INDUSTRIAL APPLICABILITY

As it has been described above, the light adjusting apparatus according to the present invention is useful as a light adjusting apparatus in which, damage to the optical thin film which is formed on a component such as an optical filter and a lens is prevented, and the light adjusting unit is driven stably.

### REFERENCE SIGNS LIST

- 101: substrate
- 102: optical aperture
- 103: rotating-shaft hole
- 201: substrate
- 202: optical aperture
- 203: rotating-shaft hole
- 300: light adjusting unit
- 301: filter frame member
- 302: optical filter
- 303: rotating-shaft member
- 304: protective portion
- 320: light adjusting unit
- 330: light adjusting unit
- 401: spacer
- 401a: curved surface portion
- 401b: flat surface portion
- 500: electromagnetic drive source
- 501: winding coil portion
- 502: yoke member
- 502a: front-end portion
- 502b: front-end portion
- 601: filter frame member
- 601a: notch portion
- 601b: notch portion
- 701: filter frame member
- 701a: protruding portion
- 801: optical axial direction
- 900: light adjusting unit

## Claims

1. A light adjusting apparatus comprising:
a first substrate in which, an optical aperture is formed, and a second substrate in which, an optical aperture is formed;
at least one rotating-shaft member which is rotatably installed on the first substrate and the second substrate;
at least one light adjusting unit which is joined to the rotating-shaft member; and
a drive unit
which moves the light adjusting unit, wherein
by moving the light adjusting unit by rotating the rotating-shaft member by the drive unit, the light adjusting unit is pivoted alternately to an opened position at which, the light adjusting unit is corresponding to the optical aperture, and a retracted position at which, the light adjusting unit is retracted from the optical aperture, and incident light which passes through the optical aperture is adjusted in the light adjusting apparatus, and
the light adjusting unit includes an optical element, and
has an isolating unit which isolates a surface opposite each other the first substrate and the second substrate of the optical element, and the first substrate and the second substrate.

2. The light adjusting apparatus according to claim 1, wherein the isolating unit is a frame member which holds the optical element from around, and has a protruding portion which protrudes in an optical axial direction.

3. The light adjusting apparatus according to claim 2, wherein the frame member has a notch portion, and the optical element is joined to the frame member at the notch portion.

4. The light adjusting apparatus according to claim 3, wherein a width of the notch portion is smaller than a diameter of the optical element, and the optical element is joined by an elastic force of the frame member.

5. The light adjusting apparatus according to claim 1, wherein the isolating unit includes at least two protruding portions which hold locally, and the optical element is held by the protruding portions.

6. The light adjusting apparatus according to one of claims 1 to 5, wherein
the rotating-shaft member is formed by a circular cylindrical shaped magnet, and
a drive source of the rotating-shaft member is an electromagnetic drive source which includes a yoke and a winding coil, and
the circular cylindrical shaped magnet is rotated by the electromagnetic drive source.
